# EUROPEAN PATENT APPLICATION

(11) **EP 2 687 297 A1**
(43) Date of publication of application: **22.01.2014**
(21) Application number: 12184244.7
(22) Date of filing: 13.09.2012
(51) Int. Cl.: B05D 1/12, B32B 27/18, B82Y 30/00, C08K 3/08, F16L 9/12

(54) **A method for manufacturing of polypropylene pipes**

(30) Priority: 20.07.2012 PL 40006812
(71) Applicant: Future Sp. z o.o., 90-752 Lodz (PL)
(72) Inventor: Moscicki, Andrzej, 91-503 Lodz (PL); Mazurek, Przemyslaw, 94-007 Lodz (PL)
(74) Representative: Pawlowski, Adam

(57) **Abstract**

A method for manufacturing of polypropylene pipes from granulated polypropylene in the process of extrusion moulding. A mixture of granulated polypropylene containing treated granulate and raw granulate at the ratio of 1:10 is extruded, wherein the treated granulate is prepared by implanting silver nanoparticles to raw granulate in such a way that the raw granulate is subject to alternate steps of coating the granulate with a colloidal solution comprising: a hydrocarbon with a boiling point below 70°C: from 98% to 99.6% by weight, a surfactant reducing surface tension: from 0.1% to 0.5% by weight; an adhesive agent: from 0.1% to 0.5% by weight; a dispersant: from 0.1% to 0.5% by weight; a viscosity modifier: from 0.1% do 0,5% by weight; silver nanoparticles in a paraffin shell having a size from 3 nm to 8 nm and in concentration of 50,000 ppm, and drying the coated granulate at a temperature below 70°C, until the silver nanoparticles in the granulate reaches the concentration of 500 ppm to 1000 ppm by weight, wherein at least the external layer of pipe is extruded from the mixture.

## Description

The present invention relates to a method for manufacturing of polypropylene pipes, used mainly for transporting of water and air.

Water pipes made of polypropylene are popular systems of transportation of utility water, both hot and cold, as well as central heating systems in buildings. They are also popular systems of air transportation in ventilation systems, especially in air heating systems of ground heat exchanger. They are characterised by very good resistance to high temperature and pressure, they can be easily connected by welding and are in 100% resistant to corrosion and scale deposit.

It would be preferable for these pipes to have anti-bacterial properties for better reduction of bacterial pollution in utility water systems or ventilation systems.

An PCT patent application WO2009018963 discloses a method of manufacturing plastic pipes for water with at least one layer containing zeolite particles, in which at least part of the ions is replaced with ions inhibiting the development of biofilm, and moreover containing nanoparticles inhibiting the development of biofilm, in particular, copper, zinc or silver nanoparticles having a size from 1 nm to 100 nm, preferably between 10 nm and 50 nm. These pipes are produced from thermoplastic polymers, such as polyethylene or polypropylene. These pipes are double-layered and produced in the process of co-extrusion. The concentration of nanoparticles decreases in the direction from the internal diameter of the pipe to its external walls. The application does not reveal how to obtain controllably variable concentration of nanoparticles in the whole volume of the pipe, however obtaining such effect is undeniably complex and requires an extraordinary process, far different from the standard extrusion process.

The aim of the present invention is to provide a method for manufacturing of polypropylene pipes with a bactericidal agent based on metal nanoparticles, guaranteeing precise application of the agent throughout the whole volume of the product, providing the pipe with long-lasting bactericidal properties, and which does not complicate the standard process of pipe extrusion.

The object of the invention is a method for manufacturing of polypropylene pipes from granulated polypropylene in the process of extrusion moulding. A mixture of granulated polypropylene containing treated granulate and raw granulate at the ratio of 1:10 is extruded, wherein the treated granulate is prepared by implanting silver nanoparticles to raw granulate in such a way that the raw granulate is subject to alternate steps of coating the granulate with a colloidal solution comprising a hydrocarbon with a boiling point below 70°C: from 98% to 99.6% by weight, a surfactant reducing surface tension: from 0.1% to 0.5% by weight; an adhesive agent: from 0.1% to 0.5% by weight; a dispersant: from 0.1% to 0.5% by weight; a viscosity modifier: from 0.1% do 0,5% by weight; silver nanoparticles in a paraffin shell having a size from 3 nm to 8 nm and in concentration of 50,000 ppm, and drying the coated granulate at a temperature below 70°C, until the silver nanoparticles in the granulate reaches the concentration of 500 ppm to 1000 ppm by weight, wherein at least the external layer of pipe is extruded from the mixture.

The object of the invention is also a polypropylene pipe manufactured using the method of the invention.

The invention allows to obtain polypropylene pipes for water or air, in which silver nanoparticles are distributed uniformly throughout the whole volume of the material; thanks to this, the pipes have permanent bactericidal properties, whilst the method does not introduce additional complications to the pipe extrusion process itself, and thus can easily be adjusted to popular extrusion systems.

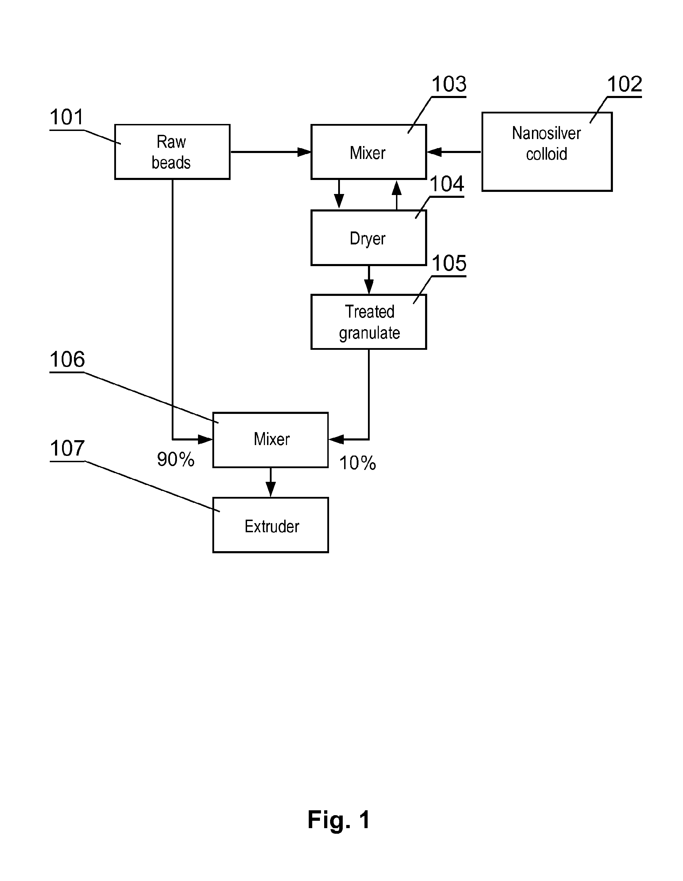

The invention is presented by means of exemplary embodiment on a drawing, in which Fig. 1 presents a diagram of a technological line for carrying out the process according to the invention.

Polypropylene pipes, according to the invention, are made from a mixture of raw granulate and treated granulate. The raw granulate comprises raw polypropylene beads, supplied from the tank 101. The raw granulate is supplied to a mixer 103, where it is mixed with a colloidal nanosilver solution 102 in order to coat the granulate surface with the solution. The coated granulate is transported to a dryer 104, where, under a temperature below 70°C, liquid evaporates, leaving silver nanoparticles implanted on the granulate surface. The process of coating and drying is repeated until a desired concentration of silver nanoparticles is obtained on the granulate surface, wherein the desired concentration is from 500 ppm to 1000 ppm.

It has been found that a colloidal solution for the implantation of silver nanoparticles on the surface of granulated polypropylene should particularly contain:
- a hydrocarbon with a boiling point below 70°C: 98% to 99.6% by weight,
- a surfactant reducing surface tension: 0.1% to 0.5% by weight;
- an adhesive agent: 0.1% to 0.5% by weight;
- a dispersant: 0.1% to 0.5% by weight;
- a viscosity modifier: 0.1% to 0.5% by weight
- silver nanoparticles in a paraffin shell of a size 3 nm to 8 nm and concentration of 50,000 ppm.

Liquid with a low boiling point facilitates evaporation of the colloid at the drying stage. For this purpose there can be used for example degreased white spirit.

A surfactant reducing surface tension makes the surface of the granulate less hydrophobic, and the colloid is less likely to flow off it. For this purpose there can be used for example Tergitol 15-S-5 produced by Dow Chemical.

An adhesive agent increases the adhesiveness of the colloid to the granulate. For this purpose we can use for example polyvinylpyrrolidone.

A dispersant guarantees the stability of colloid parameters during its storage. For this purpose there can be used for example the EDTA agent.

A viscosity modifier increases the retention of colloid viscosity in a wide range of temperatures. For this purpose there can be used for example the BYK W 966 preparation produced by BYK.

The treated granulate, in which the desired amount of silver nanoparticles was implanted, is stored in a tank 105.

The raw granulate from the tank 101 and the treated granulate from the tank 105 are supplied to the mixer 106 at the ratio of 1:10, so as to obtain concentration of nanosilver in the final product at the level from 50 ppm (for example, for cold water pipes or air pipes) to 100 ppm (for example, for hot water pipes).

The granulate mixture is then transported to an extruder 107, in which the melted granulate mixture is passed through an extruding die, to mould the shape of a pipe, and then cooled. In the extruder 107, it is possible to extrude one-layer pipes, made fully from the granulate mixture. It is also possible to extrude double-layer pipes in the extruder 107, wherein the internal layer is extruded from the granulate mixture, and the external layer is extruded from the raw granulate.

### Example

1 ton of granulated polypropylene was taken from the raw material tank 101 and batched into the mixing tank 103, together with the colloidal solution according to the invention. The granulate, coated with the solution, was transferred to the dryer chamber 104, with the inner temperature of 50°C for total drying. The dipping and drying cycles were repeated many times, until 10kg of the solution evaporated, which results in the implantation of 500 g of silver nanoparticles in 1 ton of the granulate, i.e. obtaining the concentration of 500 ppm. Afterwards, treated granulate and raw granulate were supplied to the mixer 106 at the ratio of 1:10, obtaining granulate mixture with 50 ppm concentration by weight, from which cold water pipes were moulded in the extruder.

## Claims

1. A method for manufacturing of polypropylene pipes from granulated polypropylene in the process of extrusion moulding, **characterized in that** a mixture of granulated polypropylene containing treated granulate and raw granulate at the ratio of 1:10 is extruded, wherein the treated granulate is prepared by implanting silver nanoparticles to raw granulate in such a way that the raw granulate is subject to alternate steps of coating the granulate with a colloidal solution comprising:
- a hydrocarbon with a boiling point below 70°C: from 98% to 99.6% by weight,
- a surfactant reducing surface tension: from 0.1% to 0.5% by weight;
- an adhesive agent: from 0.1% to 0.5% by weight;
- a dispersant: from 0.1% to 0.5% by weight;
- a viscosity modifier: from 0.1% do 0,5% by weight;
- silver nanoparticles in a paraffin shell having a size from 3 nm to 8 nm and in concentration of 50,000 ppm,
and drying the coated granulate at a temperature below 70°C, until the silver nanoparticles in the granulate reaches the concentration of 500 ppm to 1000 ppm by weight, wherein at least the external layer of pipe is extruded from the mixture.
